# EUROPÄISCHE PATENTANMELDUNG

(11) **EP 0 528 097 A1**
(43) Veröffentlichungstag der Anmeldung: **24.02.1993**
(21) Anmeldenummer: 91890173.7
(22) Anmeldetag: 08.08.1991
(51) Int. Cl.: B26D 7/08, B23Q 11/02

(54) **Werkzeugmaschine zum Schneiden von Flachmaterial od. dgl.**

(71) Anmelder: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Heiner, Dipl.-Ing.

(57) **Zusammenfassung**

Eine Werkzeugmaschine (1) zum Schneiden von Flachmaterial od. dgl. besitzt ein Schneidaggregat (5), das ein mit Ultraschallfrequenz schwingendes Schneidwerkzeug (6) aufweist.

Um eine schnelle und automatische Werkzeugreinigung zu ermöglichen, ist für das Schneidwerkzeug (6) eine Reinigungsvorrichtung (7) vorgesehen, die ein Reinigungsgehäuse (8) mit einer eine Reinigungsflüssigkeit (11) enthaltenden Reinigungskammer (9) und Vorzugsweise einer eine Trocknungseinrichtung aufnehmenden Trocknungskammer (10) umfaßt, wobei das Reinigungsgehäuse (8) innerhalb der Reichweite des Schneidwerkzeuges (6) angeordnet ist und eine verschließbare Zugangsöffnung (18) zum Einführen des Schneidwerkzeuges (6) in die Kammern bildet.

## Beschreibung

Die Erfindung bezieht sich auf eine Werkzeugmaschine zum Schneiden von Flachmaterial od. dgl. mit einem Schneidaggregat, das ein mit Ultraschallfrequenz schwingendes Schneidwerkzeug aufweist.

Mit Ultraschallfrequenz schwingende Schneidwerkzeuge, sogenannte Ultraschallmesser, zeichnen sich nicht nur durch ihre exakt einstellbare Schnittiefe und ihre besondere Schneidqualität aus, sondern gewährleisten auch eine vom Werkstückmaterial weitgehend unabhängige einwandfreie Schnittführung und hochwertige Schneidleistung. Sie eignen sich daher auch speziell zum Zuschneiden von Prepregs oder anderen harzgetränkten Materialen und Kunststoffen, wobei allerdings die Genauigkeit und Qualität des Schnittes durch eine werkstoffbedingte Verschmutzung des Schneidwerkzeuges leiden und somit von Zeit zu Zeit eine Säuberung des Schneidwerkzeuges von den anhaftenden Harz-, Faser-, Kunststoffteilen u. dgl. notwendig ist, was bisher ein verhältnismäßig langes Stillegen der Werkzeugmaschine bedeutet und ein mühsames händisches Ausbauen und Reinigen des Werkzeuges verlangt.

Der Erfindung liegt daher die Aufgabe zugrunde, diese Mängel zu beseitigen und eine Werkzeugmaschine der eingangs geschilderten Art zu schaffen, die eine rationelle und vor allem auch schnelle Werkzeugreinigung erlaubt.

Die Erfindung löst diese Aufgabe dadurch, daß für das Schneidwerkzeug eine Reinigungsvorrichtung vorgesehen ist, die ein Reinigungsgehäuse mit einer eine Reinigungsflüssigkeit enthaltenden Reinigungskammer und vorzugsweise einer eine Trocknungseinrichtung aufnehmenden Trocknungskammer umfaßt, wobei das Reinigungsgehäuse innerhalb der Reichweite des Schneidwerkzeuges angeordnet ist und eine vorzugsweise verschließbare Zugangsöffnung zum Einführen des Schneidwerkzeuges in die Kammern bildet. Dabei kann vorteilhafterweise der Schwingantrieb des Schneidwerkzeuges während des Reinigungsvorganges einschaltbar sein. Diese Reinigungsvorrichtung erlaubt das bedarfsweise Säubern des Schneidwerkzeuges ohne dessen Ausbau und ermöglicht praktisch zu jeder Zeit innerhalb kurzer Unterbrechungen des Schneidbetriebes eine solche Reinigung. Damit braucht mit einer Reinigung nicht bis zur Beendigung eines Arbeitsprogrammes gewartet zu werden, sondern das Schneidwerkzeug wird dann, wenn es notwendig ist, einer Reinigung unterzogen, wodurch eine stets gleichbleibende Qualität der Bearbeitung sichergestellt ist. Zur Reinigung wird das Schneidwerkzeug einfach zum Reinigungsgehäuse verfahren und in die Reinigungskammer eingeführt, in der es in die Reinigungsflüssigkeit eintaucht und vorzugsweise durch Einschalten des Schwingantriebes in kürzester Zeit gründlich zu reinigen ist. Nun wird das Werkzeug aus der Flüssigkeit herausgehoben und trocknen gelassen, wobei eine entsprechende Trocknungskammer mit geeigneten Trocknungseinrichtungen für einen beschleunigten Trocknungsablauf sorgen kann, und das Werkzeug ist wieder einsatzbereit. Das Reinigungsgehäuse läßt sich an jeder geeigneten Stelle, günstigerweise am das Schneidaggregat aufnehmenden Werkzeugschlitten anordnen, so daß es nur zu geringen Anfahrwegen für das Werkzeug kommt und auch nur eine sehr kurze Stillstandszeit der Maschine für das Reinigen in Kauf zu nehmen ist. Da als Reinigungsflüssigkeit Aceton od. dgl. Lösungsmittel verwendet werden, die sich leicht verflüchtigen und unangenehme Dämpfe bilden, ist die Zugangsöffnung zu den Kammern vorteilhafterweise verschließbar und wird lediglich zum Einführen des Werkzeuges geöffnet. Ohne händisches Zutun ist ein schnelles und auch gründliches Reinigen des Schneidwerkzeuges gewährleistet.

Liegt die Trocknungskammer oberhalb der Reinigungskammer und ist zwischen Trocknungs- und Reinigungskammer eine zur oberen Zugangsöffnung fluchtende Verbindungsöffnung vorgesehen, entsteht nicht nur ein kompaktes, platzsparendes Reinigungsgehäuse, sondern das Schneidwerkzeug läßt sich auch auf kürzestem Wege durch die Zugangsöffnung und die Verbindungsöffnung in die Reinigungskammer und dann in die Trocknungskammer bringen. Als Trocknungseinrichtung für die Trocknungskammer sind

Heizeinrichtungen, Druckluftdüsen u. dgl. möglich, doch genügt es meist, wenn die Trocknungskammer mit Entlüftungsöffnungen versehen ist, die in einem Abluftkanal ausmünden, so daß es über den an eine geeignete Saugquelle angeschlossenen Abluftkanal innerhalb der Trocknungskammer zu einer entsprechenden, die Trocknung beschleunigenden Luftströmung kommt und gleichzeitig damit eine Entsorgung der entstehenden Reinigunsmitteldämpfe gewährleistet ist.

In der Zeichnung ist der Erfindungsgegenstand beispielsweise veranschaulicht, und zwar zeigen
- Fig. 1: einen Teil einer erfindungsgemäßen Werkzeugmaschine in einem Anlagenschema und
- Fig. 2: das Reinigungsgehäuse der Reinigungsvorrichtung dieser Werkzeugmaschine im Querschnitt größeren Maßstabes.

Eine nur angedeutete Werkzeugmaschine 1 zum Schneiden von Flachmaterial besteht aus einem Schneidtisch 2, der eine Arbeitsfläche 3 zur Auflage des zu schneidenden Flachmaterials bildet. Zum Schneiden ist ein mittels eines Werkzeugschlittens 4 über die Arbeitsfläche 3 verfahrbares Schneidaggregat 5 vorgesehen, das ein mit Ultraschallfrequenz schwingendes Schneidwerkzeug 6 aufweist. Für eine bedarfsweise Reinigung des Schneidwerkzeuges 6 gibt es eine Reinigungsvorrichtung 7, die ein innerhalb der Reichweite des Werkzeuges, beispielsweise an den Seitenteilen des Werkzeugschlittens 4 angeordnetes Reinigungsgehäuse 8 mit einer Reinigungskammer 9 und einer Trocknungskammer 10 umfaßt. Die Reinigungskammer 9 ist mit einer Reinigungsflüssigkeit 11 gefüllt, wobei eine nur angedeutete versorgungseinheit 12 für das Nachfüllen der Reinigungsflüssigkeit bzw. das Einhalten einer entsprechenden Füllstandshöhe sorgt. Die Trocknungskammer 10 ist ihrerseits über Entlüftungsöffnungen 13, die in einen Ringraum 14 ausmünden, an einen Abluftkanal 15 angeschlossen, der zu einer Saugquelle 16 mit einer Entsorgungseinrichtung führt.

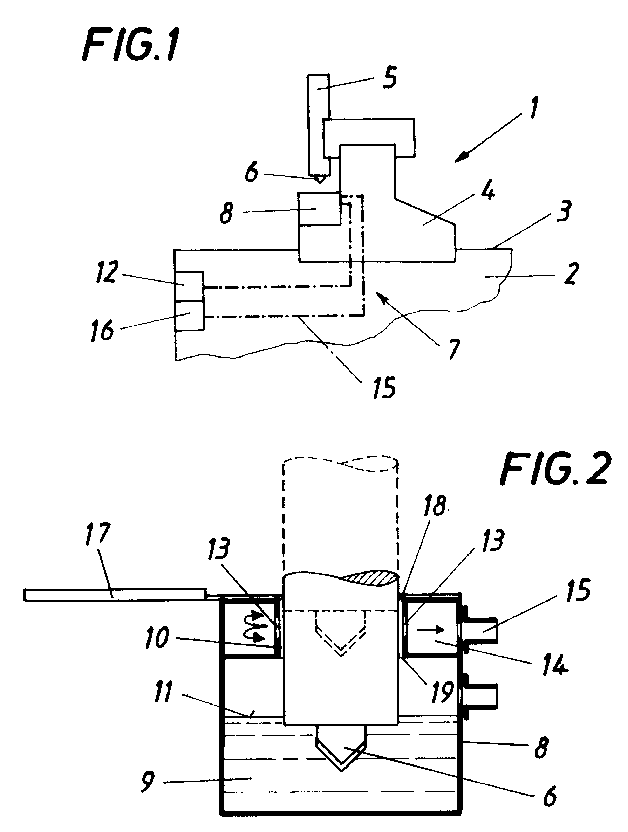

Beim Schneiden von Prepregs oder anderen Werkstücken aus kunstharzhältigem Werkstoff bleiben Harzreste od. dgl. am Schneidwerkzeug haften, so daß von Zeit zu Zeit eine Reinigung des verschmutzten Werkzeuges notwendig ist. Um eine solche Reinigung durchzuführen, wird das Schneidaggregat 5 zum Reinigungsgehäuse 8 hin verfahren, das eine obere, mit einem Deckel 17 verschließbare Zugangsöffnung 18 aufweist. Sobald sich das Schneidwerkzeug 6 oberhalb dieser Zugangsöffnung 18 befindet, wird es, nach Öffnen des Deckels 17, durch die Zugangsöffnung 18 und eine dazu fluchtende Verbindungsöffnung 19 zwischen Trocknungskammer 10 und Reinigungskammer 9 in die untere Reinigungskammer 9 eingeführt und in die Reinigungsflüssigkeit 11 eingetaucht, worauf der Schwingantrieb aktiviert wird, bis sich die Verschmutzuung gelöst hat. Nun wird das Schneidwerkzeug 6 aus der Reinigungskammer 9 in die Trocknungskammer 10 hochgehoben (strichlierte Darstellung in Fig. 2) und getrocknet, wobei die entstehenden Dämpfe über die Entlüftungsöffnungen 13 und den Abluftkanal 15 abgesaugt und entsorgt werden. Nach kurzer Zeit ist das Schneidwerkzeug 6 trocken, der Schwingantrieb und die Absaugung können abgeschaltet werden und das aus dem Reinigungsgehäuse herausgezogen Schneidwerkzeug 6 ist wieder sauber und einsatzbereit. Der Deckel 17 wird verschlossen und das Schneidaggregat 5 kann unbehindert seine Arbeit fortsetzen.

## Patentansprüche

1. Werkzeugmaschine (1) zum Schneiden von Flachmaterial od. dgl. mit einem Schneidaggregat (5), das ein mit Ultraschallfrequenz schwingendes Schneidwerkzeug (6) aufweist, dadurch gekennzeichnet, daß für das Schneidwerkzeug (6) eine Reinigungsvorrichtung (7) vorgesehen ist, die ein Reinigungsgehäuse (8) mit einer eine Reinigungsflüssigkeit (11) enthaltenden Reinigungskammer (9) und vorzugsweise einer eine Trocknungseinrichtung aufnehmenden Trocknungskammer (10) umfaßt, wobei das Reinigunsggehäuse (8) innerhalb der Reichweite des Schneidwerkzeuges (6) angeordnet ist und eine vorzugsweise verschließbare Zugangsöffnung (18) zum Einführen des Schneidwerkzeuges (6) in die Kammer (9, 10) bildet.

2. Werkzeugmaschine nach Anspruch 1, dadurch gekennzeichnet, daß der Schwingantrieb des Schneidwerkzeuges (6) während des Reinigungsvorganges einschaltbar ist.

3. Werkzeugmaschine nach Anspruch 1 oder 2, dadurch gekennzeichnet, daß die Trocknungskammer (10) oberhalb der Reinigungskammer (9) liegt und zwischen Trocknungs- und Reinigungskammer eine zur oberen Zugangsöffnung (18) fluchtende Verbindungsöffnung (19) Vorgesehen ist.

4. Werkzeugmaschine nach einem der Ansprüche 1 bis 3 dadurch gekennzeichnet, daß die Trocknungskammer (10) mit Entlüftungsöffnungen (13) versehen ist, die in einen Abluftkanal (14, 15) ausmünden.
